# EUROPÄISCHE PATENTANMELDUNG

(11) **EP 0 832 788 A1**
(43) Veröffentlichungstag der Anmeldung: **01.04.1998**
(21) Anmeldenummer: 97114766.5
(22) Anmeldetag: 26.08.1997
(51) Int. Cl.: B60R 21/20

(54) **Gassackabdeckung mit einer Aussenfläche aus Naturleder**

(30) Priorität: 27.09.1996 DE 29616906 U
(71) Anmelder: TRW Occupant Restraint Systems GmbH, 73551 Alfdorf (DE)
(72) Erfinder: Fischer, Anton, 73572 Heuchlingen (DE)
(74) Vertreter: Kitzhofer, Thomas, Dipl.-Ing.

(57) **Zusammenfassung**

Eine Gassackabdeckung mit einer mit Naturleder bezogenen Außenseite ist dadurch gekennzeichnet, daß der Naturlederbezug (7) eine Dicke von maximal 0,8 mm aufweist und auf eine flächige, eine vorbestimmbare Reißfestigkeit aufweisende Trägerschicht (5) aufgebracht ist sowie eine auf der Außenseite der Abdeckung befestigte Einheit mit der Trägerschicht (5) bildet.

## Beschreibung

Die Erfindung betrifft eine Gassackabdeckung mit einer mit Naturleder bezogenen Außenseite.

In Fahrzeugen der gehobenen Klasse, bei denen das Lenkrad oder Teile des Armaturenbretts naturlederbezogen sind, ist auch die Abdeckung eines in der Lenkradnabe oder im Armaturenbrett eingebauten Gassacks außenseitig mit Naturleder bezogen. Das hierzu verwendete Leder hat eine Dicke von bis zu 1,5 mm und unterliegt in seiner Reißfestigkeit naturbedingt großen Schwankungen. Diese führen dazu, daß der Widerstand, den die Abdeckung vor ihrem Aufreißen dem sich entfaltenden Gassack entgegensetzt, nicht exakt vorbestimmbar ist. Deshalb wird das Naturleder geschlitzt und im geschlitzten Bereich mit einer Reißnaht wieder vernäht, wodurch die zum Aufreißen der Abdeckung notwendige Kraft in relativ engen Grenzen vorbestimmt werden kann. Das Vorsehen einer Reißnaht stellt jedoch optisch keine befriedigende Lösung dar.

Die Erfindung schafft eine Gassackabdeckung, bei der das Vorsehen einer Reißnaht überflüssig ist und bei der die Reißfestigkeit der Gassackabdeckung in engen Grenzen vorbestimmt werden kann. Dies wird bei einer Gassackabdeckung der eingangs genannten Art erfindungsgemäß dadurch erreicht, daß der Naturlederbezug eine Dicke von maximal 0,8 mm aufweist und auf einer flächigen, eine vorbestimmbare Reißfestigkeit aufweisenden Trägerschicht aufgebracht ist sowie eine auf der Außenseite der Abdeckung befestigte Einheit mit der Trägerschicht bildet. Das bei der Gassackabdeckung nach der Erfindung verwandte Naturleder weist eine wesentlich geringere Dicke als bislang üblich auf, so daß ihre Reißfestigkeit keinen entscheidenden Einfluß mehr auf die gesamte Reißfestigkeit der Abdeckung hat. Um die gewünschte Weichheit der Oberfläche, die an einem Lederbezug geschätzt wird, aufzuweisen, ist die dünne Naturlederschicht auf eine Trägerschicht aufgebracht, die eine vorbestimmbare Reißfestigkeit aufweist.

Vorzugsweise sind die Trägerschicht und der Naturlederbezug miteinander verklebt.

Die weiche Trägerschicht kann eine Filzschicht oder eine Kunststoffschicht sein, die aus geschäumtem oder gespritztem Kunststoff hergestellt ist.

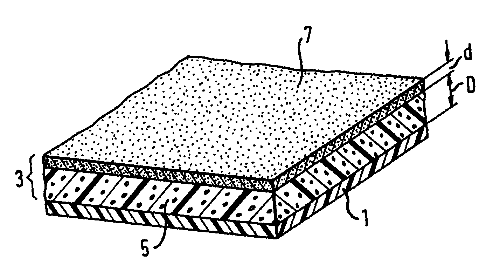

Weitere Merkmale und Vorteile der Erfindung ergeben sich aus der nachfolgenden Beschreibung und aus der Zeichnung, auf die Bezug genommen wird. Die Zeichnung zeigt einen Schnitt durch die Außenwand einer Gassackabdeckung, der deren Aufbau wiedergibt.

Die Außenwand einer Gassackabdeckung umfaßt einen Grundkörper 1 aus gespritztem Kunststoff und einen auf dessen Außenoberfläche aufgeliebten Bezug 3. Der Bezug 3 besteht dabei aus einer weichen, elastisch nachgiebigen Schicht aus geschäumtem Kunststoff und einem außenseitig auf diese aufgeklebten Naturlederbezug 7.

Die Dicke d des Naturlederbezugs beträgt nur etwa 0,3 mm. Die Dicke D der Trägerschicht 5 ist beliebig, sie sollte jedoch so dick gewählt sein, daß sie der Gassackabdeckung eine angenehme, weiche Haptik gibt.

Da der Grundkörper 1 und die Trägerschicht 5 homogen aufgebaut sind, läßt sich deren Reißfestigkeit exakt vorbestimmen. Die Reißfestigkeit der Abdeckung sollte deshalb in vorbestimmbaren, engen Grenzen gehalten werden können, da einem Gassack, der an der Innenseite der Abdeckung an diese angrenzt, beim Entfalten ein möglichst genau vorbestimmbarer Widerstand entgegengesetzt werden sollte.

Der Naturlederbezug 7 ist so dünn ausgeführt, daß seine Reißfestigkeit sehr gering ist und die Gesamtreißfestigkeit der Abdeckung nicht wesentlich beeinflußt, so daß sich auch naturbedingte Schwankungen der Reißfestigkeit des Lederbezugs 7 nicht wesentlich auf die Gesamtreißfestigkeit auswirken.

Zur Herstellung der Gassackabdeckung wird das Naturleder auf eine Dicke von etwa 0,3 mm gespalten und auf die Tragerschicht 5 aufgeklebt, so daß eine Einheit entsteht. Der dadurch gebildete Bezug 3 wird der Form des Grundkörpers 1 entsprechend zugeschnitten und auf ihn aufgeklebt.

## Patentansprüche

1. Gassackabdeckung mit einer mit Naturleder bezogenen Außenseite, dadurch gekennzeichnet, daß der Naturlederbezug (7) eine Dicke von maximal 0,8 mm aufweist und auf eine flächige, eine vorbestimmbare Reißfestigkeit aufweisende Trägerschicht (5) aufgebracht ist sowie eine auf der Außenseite der Abdeckung befestigte Einheit mit der Trägerschicht (5) bildet.

2. Gassackabdeckung nach Anspruch 1, dadurch gekennzeichnet, daß der Naturlederbezug (7) auf die Trägerschicht (5) geklebt ist.

3. Gassackabdeckung nach Anspruch 1 oder 2, dadurch gekennzeichnet, daß die Trägerschicht (5) eine Filzschicht oder eine nachgiebige Schicht aus geschäumtem oder gespritztem Kunststoff ist.

4. Gassackabdeckung nach einem der vorstehenden Ansprüche, dadurch gekennzeichnet, daß der Naturlederbezug eine Dicke von etwa 0,3 mm aufweist.
